# EUROPÄISCHE PATENTSCHRIFT

(11) **EP 2 054 637 B1**
(45) Veröffentlichungstag und Bekanntmachung des Hinweises auf die Patenterteilung: **28.11.2012**
(21) Anmeldenummer: 07801269.7
(22) Anmeldetag: 22.08.2007
(51) Int. Cl.: F16B 19/08, F16B 19/10

(54) **SELBSTBOHRENDES BLINDNIET**
SELF-TAPPING BLIND RIVET
RIVET AVEUGLE AUTOPERFORANT

(30) Priorität: 26.08.2006 DE 202006013142 U
(43) Veröffentlichungstag der Anmeldung: 06.05.2009
(73) Patentinhaber: Avdel UK Limited, Welwyn Garden City Hertfordshire AL7 1LY (GB)
(72) Erfinder: JOKISCH, Matthias, 30853 Langenhagen (DE)
(74) Vertreter: Beck, Alexander
(86) Internationale Anmeldenummer: PCT/DE2007/001486
(87) Internationale Veröffentlichungsnummer: WO 2008/025327

(56) Entgegenhaltungen:
- EP-A- 1 503 089
- WO-A-94/00701
- US-A- 3 750 518

## Beschreibung

Die vorliegende Erfindung betrifft ein selbstbohrendes Blindniet mit einem Dorn, der eine lochformende Spitze an seinem dem Werkstück zugewandten Ende trägt sowie ein Verfahren zum Setzen eines solchen Blindniets.

Solche selbstbohrende Blindnieten sind bereits aus dem Stand der Technik bekannt. Dabei ist die Spitze des Zugkopfes des Blindnietdornes werkstückseitig als Bohrwerkzeug zum Bohren eines Loches in das Werkstück ausgebildet. Der entsprechende Drehantrieb erfolgt über den Nietdorn, an dessen werkzeugseitigen Ende entsprechende Kraftangriffe vorgesehen sind.

Entsprechende selbstlochende Blindniete, bei denen die Spitze als Vorrichtung zum spanlosen Bohren durch thermische Erweichung des Werkstücks durch Rotation der Spitze ausgebildet ist, sind beispielsweise bereits aus der WO 2004/102015 A1 oder der EP 1 503 089 A1 bekannt.

Der diesbezüglich interessanteste Stand der Technik ergibt sich jedoch aus der DE 10 2005 035 402 A1. Diese Veröffentlichung zeigt bereits ein Rührreibniet, also ein selbstlochendes Blindniet mit einem Dorn, dessen Spitze als Vorrichtung zum spanlosen Bohren durch thermische Erweichung des Werkstücks durch Rotation der Spitze ausgebildet ist. Hier ist stücks durch Rotation der Spitze ausgebildet ist. Hier ist darüber hinaus auch eine form- oder kraftschlüssige Verbindung zwischen Nietdorn und Nietschaft vorgesehen.

Auch bei dieser Veröffentlichung ist jedoch vorgesehen, dass der Nietdorn drehend angetrieben wird. Die Verbindung zwischen Nietdorn und Nietschaft dient dabei dazu, dass sich der Nietschaft mitdreht, damit die Werkstücke während des Eintreibens des Rührreibniets auch seitlich des Niets durch die Reibungswärme verformbar bzw. weich oder flüssig gehalten werden.

Dieser Stand der Technik führt daher von der vorliegenden Erfindung diametral weg, da durch die Notwendigkeit, zusätzlich zum Nietdorn auch noch die Niethülse zu einer entsprechenden Drehbewegung anzutreiben, ein noch größeres Drehmoment über den Nietdorn übertragen werden muss. Die DE 10 2005 035 402 A1 sieht deshalb auch keine entsprechende Sollbruchstelle vor, so dass hier ein Abreißen des Nietdorns offensichtlich nicht vorgesehen ist.. In den Ausführungsbeispielen dieser Veröffentlichung soll der Nietdorn vielmehr im Blindniet verbleiben.

Diese Konstruktion gemäß dem Stand der Technik hat daher folgenden, ganz erheblichen Nachteil:
Das Drehmoment für das Bohren muss über die Sollbruchstelle geleitet werden, an der der Nietdorn abreißen soll, wenn das Blindniet gesetzt worden ist.

Die Übertragung des Drehmoments zum Formen des Setzloches führt bei Nieten gemäß dem Stand der Technik dazu, dass die Sollbruchstelle vorzeitig bricht, insbesondere wenn das Niet beim Bohren des Setzloches leicht verkantet.

Dieses Probleme wird in der US-A-3750, auf der den Oberbegriff der Ansprüche 1 und 3 basiert, dadurch gelöst, dass eine form- oder kraftschlüssige Verbindung zwischen Nietdorn und Nietschaft vorgesehen ist, und ein Kraftangriff für ein Werkzeug im oder am Nietkopf vorgesehen ist. Auf diese Weise umgeht der Drehmomentfluss die Sollbruchstelle im Nietdorn, da das Drehmoment bis zum Kopf des Blindnietdornes über den Nietschaft übertragen wird.

Die Aufgabe der vorliegenden Erfindung, wird durch die Merkmale des Anspruchs 1 gelöst; eine Klebeverbindung zur kraftschlüssigen Verbindung des werkstückseitigen Endes des Nietschafts mit dem Nietdorn vorgesehen, oder es wird die Rückseite der lochformenden Spitze mittels Reibschweißen oder elektrischem Widerstandsschweißen mit dem Nietschaft verbunden.

Besonders bevorzugt ist, wenn die Spitze als ballige Reibfläche ausgebildet ist. Sie dient dann zum spanlosen Bohren durch thermische Erweichung der Werkstücke durch Rotation der Reibfläche.

Die Aufgabe der vorliegenden Erfindung wird des weiteren durch ein Verfahren zum Setzen eines Blindniets gemäss des Anspruchs 3 gelöst.

Es sei darauf hingewiesen, dass spanlos lochformende Schrauben bereits aus der DE 39 09 725 C1, der DE 39 22 684 A1 und der DE 44 40 437 C1 bekannt sind. Die dort vorgesehenen Maßnahmen zum Bohren des Setzloches ins Werkstück durch das Verbindungselement selbst ohne dass Späne entstehen, können erfindungsgemäß auch im vorliegenden Fall angewendet werden. Es wird daher davon abgesehen, die entsprechende Ausformung der zur Lochformung dienenden Spitze und das Verfahren des Fließformens von Setzlöchern durch das Verbindungselement selbst hier näher zu beschreiben.

Die vorliegende Erfindung wird im Folgenden anhand des in den Zeichnungen dargestellten Ausführungsbeispiels näher erläutert. Es zeigt:
Figur 1 ein nicht beanspruchtes selbstbohrendes Blindniet von der Seite in teilweiser Schnittdarstellung;
Figur 2 ein nicht beanspruchtes selbstbohrendes Blindniet mit hexalobulärem Kraftangriff von oben;
Figur 3 ein weiteres nicht beanspruchtes selbstbohrendes Blindniet mit normalem Sechskant als Kraftangriff von oben;
Figur 4a die Ausbildung des Nietdorns für ein weiteres nicht beanspruchtes selbstbohrendes Blindniet;
Figur 4b Nietdornspitze und Niethülse des Blindniets der Figur 4a nach Zusammenbau und Montage (Crimpen), und
Figur 5 eine weitere nicht beanspruchte Ausführungsform eines selbstbohrenden Blindniets, bei dem die Rückseite der Dornspitze mit scharfen Schneiden versehen ist.

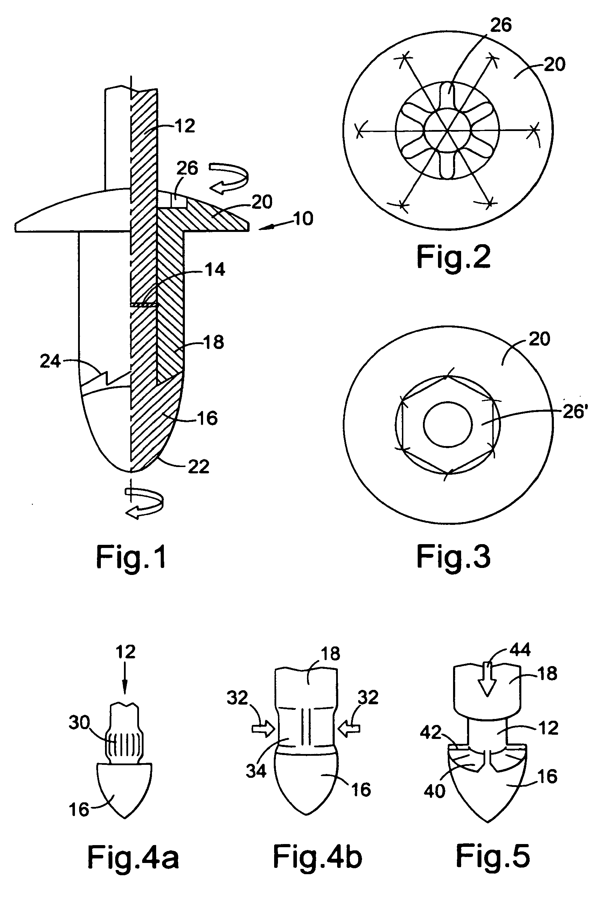

Wie in Figur 1 dargestellt, umfasst eine nicht beanspruchte Ausführungsform ein übliches Dornbruchblindniet 10 mit einem Nietdorn 12, der über eine übliche Sollbruchstelle 14 in den verdickten Kopf 16 des Dornes 12 übergeht. Dieser Dorn ist wie bei Blindnieten üblich, von dem Nietschaft 18 mit dem Nietkopf 20 an der dem Werkstück abgewandten Seite umgeben. Der Kopf 16 des Dornes 12 mit einer ballig ausgeformten Spitze 22 versehen, die, wenn sie in ausreichend hohe Umdrehungszahlen versetzt wird, dem Bohren des Setzloches des Blindniets durch Fließformen durch Erwärmung des Werkstückes dient.

Um die entsprechenden Rotationskräfte beziehungsweise Drehmomente zu übertragen, ist das werkstückseitige Ende des Nietschafts 18 mit einer sägezahnförmigen Verzahnung 24 versehen.

Die werkzeugseitige Rückseite des Dornkopfes 16 ist dabei mit entsprechend angepassten Ausnehmungen zur Aufnahme der Sägezähne 24 versehen, wie dargestellt.

Um die entsprechenden Drehmomente beziehungsweise Kräfte auf den Nietschaft 18 und von dort unter Umgehung der Sollbruchstelle 14 auf die Spitze 22 des Dornkopfes 16 zu übertragen, ist sodann noch ein Innenkraftangriff 26 in dem Kopf 20 des Blindnietes 10 vorgesehen.
Figur 2 zeigt diesbezüglich einen hexalobulären Innenkraftangriff 26, wie er beispielsweise unter der Marke Torx^{®} bekannt ist.
Figur 3 zeigt demgegenüber eine abgewandelte Ausführungsform, bei dem ein üblicher sechseckiger Innenkraftangriff 26' vorgesehen ist. Selbstverständlich sind auch vielfältige andere Kraftangriffe hier verwendbar.

Auf diese Weise kann der Nietkopf und damit der Nietschaft mittels eines üblichen Werkzeuges in so starke Rotation versetzt werden und gleichzeitig gegen das Werkstück gedrückt werden, dass die ballig ausgebildete Spitze 22 des Blindnietes eine Werkstückoberfläche durch die rotationsbedingte Erwärmung zu erweichen vermag und sodann auch in diese eindringen kann, wobei das entsprechende Setzloch gebildet wird. Dabei werden die entsprechenden Kräfte beziehungsweise Drehmomente erfindungsgemäß nicht über die Sollbruchstelle 14, sondern über den wesentlich widerstandsfähigeren Schaft 18 des Nietes übertragen, der wiederum über die Verzahnung 24 die Kräfte in den Dornkopf 16 mit der Spitze 22 überträgt. Es können also wesentlich größere Kräfte und Drehmomente auf die Spitze des erfindungsgemäßen selbstbohrenden Blindnietes übertragen werden, ohne dass die Gefahr besteht, dass der Dorn vor der Zeit an der Sollbruchstelle 14 reißt.

Es ist es natürlich auch möglich, die Kraftübertragung zwischen Nietschaft 18 und Dornkopf 16 anders zu lösen, beispielsweise durch eine gegenseitige Verzahnung von Dorn 12 und Schaft 18, beispielsweise durch abwechselnd ange-ordnete, parallel zur Rotationsachse des Dornes 12 verlaufende Nuten auf der äußeren Mantelfläche des Dornes 12 und auf der Innenfläche des Schaftes 18 in der Nähe des Dornkopfes 16.

Erfindungsgemäβ wird die Kraftübertragung nacht beanspruchte durch Verkleben des werkstückseitigen Endes des Schaftes 18 mit dem Dornkopf 16 erfolgen. Bei dieser Lösung ist vorteilhafterweise auch die Verwendung bisher üblicher Dornbruchblindniete möglich, sofern diese nur einen irgendwie gearteten Kraftangriff an der Hülse für das Drehwerkzeug zum Bohren ermöglichen. Alternativ kann die Rückseite der lochformenden Spitze mittels Reibschweißen oder elektrischem Widerstandsschweißen mit dem Nietschaft verbunden werden.

Weitere nicht beanspruchte Kraftübertragungsmöglichkeiten zwischen Nietdorn 12 und Schaft 18 werden im Folgenden an Hand der in den Figuren 4a, 4b und 5 dargestellten Beispiele näher erläutert.

Figur 4a zeigt einen Dorn 12, der oberhalb der lochformenden Spitze 16 mit einer Rändelung 30 versehen ist. Diese Rändelung 30 dient hier zur Übertragung der Antriebskräfte beim Bohren des Setzloches durch das Blindniet selbst.

Wie in Figur 4b dargestellt, wird zu diesem Zweck die Hülse 18 im Bereich der Rändelung 30 nach dem Einstecken des Nietdorns 12 entsprechend gecrimpt. Der Vorgang der Crimpung ist dabei durch die Pfeile 32 angedeutet, der entstandene Crimpungsabdruck wird durch das Bezugszeichen 34 dargestellt.

Figur 5 zeigt noch eine weitere nicht beanspruchte Möglichkeit zur Übertragung der Antriebskräfte von der Hülse 18 auf die Spitze 16. Hierbei ist die der Hülse 18 zugewandte (Rück-) Seite 40 der Spitze 16 mit scharfen Schneiden oder Graten 42 versehen, die sich vom Dorn 12 weg radial nach außen erstrecken. Durch die Anpresskräfte beim Einbohren des selbstbohrenden Blindniets 10, die hier durch den Pfeil 44 symbolisiert sind, schneiden sich die Grate 42 in die vordere Stirnfläche der Hülse 18 ein, wodurch die Kraftübertragung für die Drehkräfte für das Bohrung des eigenen Setzloches des Blindniets 10 problemlos übertragen werden können.

Die Kraftangriffe 26 können in oder am Nietkopf 20 außer als Innenkraftangriff, wie in Figur 1 dargestellt, auch als separater Außenkraftangriff ausgebildet werden oder dadurch hergestellt sein, dass der Außenumfang des Kopfes 20 der Hülse beispielsweise als Sechskant für den Kraftangriff ausgebildet ist.

Entsprechende Innenkraftangriffe können als Innensechskant, mit Kreuzschlitzform oder als hexalobulärer Innenkraftangriff ausgestaltet sein.

Entsprechende Außenkraftangriffe können als Vierkant, Sechskant oder Außensechsrund (hexalobulär) ausgebildet sein.

Die vorliegende Erfindung eignet sich dabei für alle bekannten Formen von Blindnieten.

Selbstverständlich kann statt einer balligen Spitze zum Fließformen des Setzloches für das Blindniet auch eine entsprechende "klassische Bohrspitze" für spanendes Bohren vorgesehen sein, wenn der Anfall von Spänen nicht stört.

Die vorliegende Erfindung eignet sich besonders gut in solchen Fällen, in denen eine selbstbohrende Schraube nicht verwendet werden kann, da die zu verbindenden Werkstücke zu dünn sind, um ein ausreichendes Gewinde auszubilden. Dann ist das erfindungsgemäße Blindniet die einzige anwendbare Lösung. Bezüglich der verschiedenen Möglichkeiten zur Ausformung einer rein fließformenden, spanlos arbeitenden Spitze oder einer teilweise spanerzeugenden Spitze sei nur beispielhaft auf die DE 39 09 725 C1, die DE 39 22 684 A1 und die DE 44 40 437 C1 verwiesen, in denen die verschiedenen Spitzenformen und die entsprechenden Bohrverfahren in Bezug auf Schrauben ausführlich beschrieben sind.

## Patentansprüche

1. Selbstlochendes Blindniet (10) mit einem Dorn (12), der eine lochformende Spitze (16) an seinem dem Werkstück zugewandten Ende trägt, bei der die Spitze (16) als Vorrichtung zum Bohren des eigenen Setzloches ausgebildet ist; einer Verbindung zwischen Nietdorn (12) und Nietschaft (18); und einem Kraftangriff (26) für ein Werkzeug im oder am Nietkopf (20), **dadurch gekennzeichnet, dass** Nietschaft (18) und Nietdorn (12) in der Nähe des werkstückseitigen Endes des Nietschafts (18) durch eine Klebeverbindung verbunden sind, oder die Rückseite der lochformenden Spitze (16) mittels Reibschweißen oder elektrischem Widerstandsschweißen mit dem Nietschaft (18) verbunden ist.

2. Selbstlochendes Blindniet nach Anspruch 1, **dadurch gekennzeichnet, dass** die Spitze (16) als ballige Reibfläche (22) zum spanlosen Bohren durch thermische Erweichung des Werkstückes durch Rotation der Reibfläche (22) ausgebildet ist.

3. Verfahren zum Setzen eines Blindniets (10) zur Verbindung zweier oder mehrerer Werkstücke, wobei die Werkstücke vorher nicht mit einer Bohrung versehen werden, sondern das Blindniet (10) seine Bohrung dadurch selbst erzeugt, dass die Spitze (22) des Dorns (12) des Blindniets (10) gedreht wird und die Bohrung so hergestellt wird, während das Blindniet (10) gesetzt wird; wobei das Blindniet (10) mittels eines am Kopf (20) seines Schaftes (18) angeordneten Kraftangriffes (26) zur Rotation angetrieben wird, und die Rotationskräfte von dem Schaft (18) auf den Nietdor (12) und von diesem auf die Spitze (22) übertragen werden **dadurch gekennzeichnet, dass** zu diesem Zweck Nietschaft (18) und Nietdorn (12) in der Nähe des werkstückseitigen Endes des Nietschafts (18) miteinander verklebt werden, und so die Antriebskraft für die Drehbewegung der Spitze (16) des Nietdorns (12) übertragen wird, oder die Rückseite der lochformenden Spitze (16) mittels Reibschweißen oder elektrischem Widerstandsschweißen mit dem Nietschaft (18) verbunden wird, und so die Antriebskraft für die Drehbewegung der Spitze (16) des Nietdorns (12) übertragen wird.

## Claims

1. Self-tapping blind rivet (10) having a mandrel (12) which is carrying at its end facing the work-piece a hole-forming tip (16), in which the tip (16) is performed as an apparatus for drilling the own placing hole; a fit between the mandrel (12) of the rivet and the rivet shank (18); and a force application point (26) for a tool within or at the rivet head (20), **characterized in that** the rivet shank (18) and the mandrel (12) of the rivet close to the end of the rivet shank (18) on the sid e of the work-piece are connected by an adhesive connection, or the back-side of the hole-forming tip (16) by means of frictional welding or electric resistance welding is connected with the rivet shank (18).

2. Self-tapping blind rivet according to claim 1, **characterized in that** the tip (16) is formed as a spherical friction surface (22) for non-cutting drilling by thermic softening of the work-piece by rotation of the friction surface (22).

3. Method for placing a blind rivet (10) for joining two or more work-pieces, wherein the work-pieces are previously not provided with a bore but that the blind rivet (10) is producing its bore itself by the feature that the tip (16) of the mandrel (12) of the blind rivet (10) is turned and followingly the bore is produced in such a way while the blind rivet (10) is placed; wherein the blind rivet (10) by means of a force application point (26) being positioned at the head (20) of its shank (18) is rotationally driven and, that the rotational forces from the shank (18) of the rivet are transferred to the mandrel (12) and from the same to the tip (16), **characterized in that** for this purpose the rivet shank (18) and the mandrel (12) of the rivet in the vicinity of the end of the rivet shank (18) on the side of the work-piece are glued together and in this way the drive force for the rotational movement of the tip (16) of the mandrel of the rivet is transferred, or the back-side of the hole-forming tip (16) by means of frictional welding or electric resistance welding is connected with the rivet shank (18) and in this way the drive force for the rotational movement of the tip (16) of the mandrel (12) of the rivet is transferred.

## Revendications

1. Rivet aveugle autoperforant (10) avec un goujon (12) qui porte une pointe perforatrice (16) à son extrémité tournée vers la pièce à traiter, la pointe (16) se présentant sous la forme d'un dispositif pour forer le trou de pose proprement dit ; une liaison entre le goujon de rivet (12) et le corps de rivet (18) et une prise de force (26) pour un outil dans ou sur la tête de rivet (20), **caractérisé en ce que** le corps de rivet (18) et le goujon de rivet (12) sont liés au voisinage de l'extrémité côté pièce à traiter du corps de rivet (18) par une liaison de colle ou le côté arrière de la pointe perforatrice (16) est lié au corps de rivet (18) au moyen d'un soudage par friction ou d'un soudage par résistance électrique.

2. Rivet aveugle autoperforant selon la revendication 1, **caractérisé en ce que** la pointe (16) se présente sous la forme d'une surface de friction bombée (22) pour un forage sans copeaux par ramollissement .thermique de la pièce à traiter par rotation de la surface de friction (22).

3. Procédé pour la pose d'un rivet aveugle (10) à des fins de liaison de deux pièces à traiter ou plus, dans lequel les pièces à traiter ne sont pas pourvues préalablement d'un orifice, mais le rivet aveugle (10) produit son orifice lui-même en faisant en sorte que la pointe (22) du goujon (12) du rivet aveugle (10) soit soumise à une rotation et que l'orifice soit formé tandis que le rivet aveugle (10) est en cours de pose ; dans laquelle le rivet aveugle (10) est entraîné en rotation au moyen d'une prise de force (26) appliquée sur la tête (20) de son corps (18) et les forces de rotation sont transférées du corps (18) sur le goujon de rivet (12) et de celui-ci à la pointe (22), **caractérisé en ce que**, à cette fin, le corps de rivet (18) et le goujon de rivet (12) sont collés l'un à l'autre au voisinage de l'extrémité côté pièce à traiter du corps de rivet (18) et, de la sorte, la force d'entraînement est transférée pour le déplacement en rotation à la pointe (16) du goujon de rivet (12) ou bien le côté arrière de la pointe perforatrice (16) est lié au corps de rivet (18) par soudage par friction ou par soudage à résistance électrique et la force d'entraînement est alors transférée pour le déplacement en rotation à la pointe (16) du goujon de rivet (12).
